# EUROPEAN PATENT SPECIFICATION

(11) **EP 1 276 289 B1**
(45) Date of publication and mention of the grant of the patent: **08.03.2006**
(21) Application number: 01130993.7
(22) Date of filing: 28.12.2001
(51) Int. Cl.: H04L 27/26, H04L 25/03

(54) **OFDM receiving system for performing system timing synchronization using guard interval and method for the same**
Ofdm-Empfangssystem zur Taktsynchronisierung mit einem Schutzintervall und entsprechendes Verfahren
Système de réception mdfo de synchronization d'horloge utilisant une intervalle de garde et procédé correspondant

(30) Priority: 11.07.2001 KR 2001041556
(43) Date of publication of application: 15.01.2003
(73) Proprietor: SAMSUNG ELECTRONICS CO., LTD., Suwon-City, Kyungki-do (KR)
(72) Inventor: Kim, Jung-jin, Suseong-gu, Taegu (KR); Han, Dong-suk, IPT, Samsung Electr. Co., Ltd., Suwon-city, Kyungki-do 442-370 (KR)
(74) Representative: Grünecker, Kinkeldey, Stockmair & Schwanhäusser Anwaltssozietät

(56) References cited:
- EP-A- 1 063 824
- SPETH M ET AL: "Frame synchronization of OFDM systems in frequency selective fading channels" , VEHICULAR TECHNOLOGY CONFERENCE, 1997, IEEE 47TH PHOENIX, AZ, USA 4-7 MAY 1997, NEW YORK, NY, USA,IEEE, US, PAGE(S) 1807-1811 XP010229079 ISBN: 0-7803-3659-3 * the whole document *
- KIM D K ET AL: "A NEW JOINT ALGORITHM OF SYMBOL TIMING RECOVERY AND SAMPLING CLOCK ADJUSTMENT FOR OFDM SYSTEMS" , IEEE TRANSACTIONS ON CONSUMER ELECTRONICS, IEEE INC. NEW YORK, US, VOL. 44, NR. 3, PAGE(S) 1142-1148 XP000851632 ISSN: 0098-3063 * Section IV *

## Description

The present invention relates to an orthogonal frequency division multiplex (OFDM) receiving system, and more particularly, to an OFDM receiving system for changing a fast Fourier transform (FFT) window period using a guard interval, and a method for the same.

Generally, OFDM transmitting systems transmit information over a subcarrier using fast Fourier transform (FFT) and add a guard interval to the front portion of a useful symbol in order to reduce the influence of a multi-path. OFDM receiving systems find the boundary between a guard interval and a useful symbol interval in a received OFDM signal and perform FFT window timing synchronization in order to perform FFT with respect to only a useful symbol. For this, OFDM receiving systems roughly find an FFT interval using the similarity between the guard interval and the useful symbol.

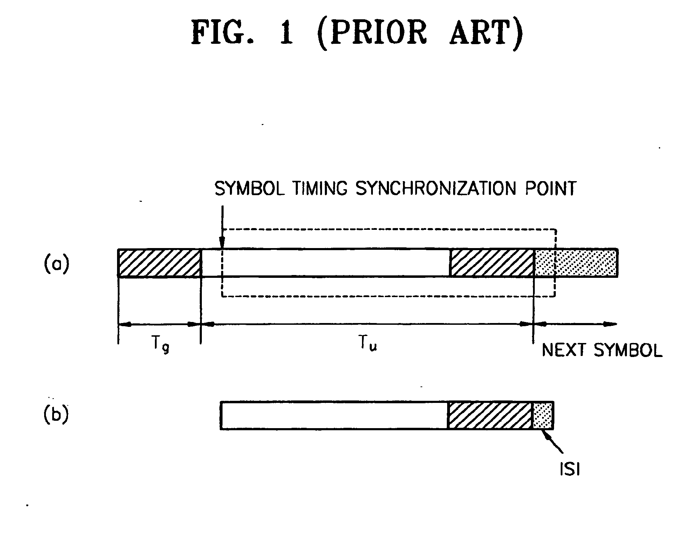

FIG. 1 is a conceptual diagram of symbol timing synchronization in a conventional OFDM receiving system. Referring to (a) of FIG. 1, a single symbol is composed of a guard interval T_{g} and a useful symbol interval Tᵤ. A window timing controller (not shown) controlling window timing determines the start point of a symbol using a guard interval and inputs N samples starting from the determined symbol start point to an FFT operation unit (not shown). Here, the window timing controller inputs samples corresponding to the useful symbol interval Tᵤ starting from a symbol timing synchronization point of the FFT window period to the FFT operation unit.

However, when the FFT window period is set, as shown in (a) of FIG. 1, the window timing controller does not determine a correct symbol start point under a pre-ghost channel environment having a multi-path resulting in intersymbol interference (ISI) occurring between a back portion of a symbol and a portion of the next symbol, as shown in (b) of FIG. 1. Such ISI causes the performance of the OFDM receiving system to be degraded.

In EP-A-1 063 824 an apparatus and method for OFDM demodulation are described that establish symbol synchronization in such a manner as to minimize between-symbol interference under the environment where multipath occurs. The apparatus is capable of setting symbol timing. An incoming signal is an OFDM signal including a transmission symbol structured by a valid symbol period and a guard interval. A predetermined synchronization symbol is included in the OFDM signal for every transmission frame. An A/D converter converts the received OFDM signal into a time series digital signal. A timing determination device determines symbol timing. An FFT window generator outputs operation timing for Fourier transform from the determined symbol timing. A Fourier transform part subjects the OFDM signal to Fourier transform according to the window timing. A pilot carrier extraction part extracts the pilot carriers from the signal obtained by Fourier transform in the Fourier transform part.

It is the object of the present invention to prevent intersymbol interference occurring in a multi-channel or a pre-ghost channel.

This object is solved by the invention as defined in the independent claims. Embodiments of the invention are given in the dependent claims.

According to an aspect of the present invention, there is provided an OFDM receiving system for performing the OFDM receiving method.

To achieve the object of the invention, there is provided an OFDM receiving method of performing FFT with respect to a data transmission interval of a symbol unit composed of a guard interval and a useful symbol interval. The method includes extracting scattered pilots, which are inserted into a symbol at intervals of predetermined samples, from a received OFDM signal, estimating a symbol timing offset using the extracted scattered pilots and setting a symbol timing synchronization point in the data transmission interval, and adding samples in a predetermined interval in the data transmission interval to samples in an interval obtained by subtracting a predetermined length from the useful symbol interval starting from the symbol timing synchronization point and performing FFT with respect to the result of addition.

According to another aspect of the invention, there is provided an OFDM receiving system for performing FFT with respect to a data transmission interval of a symbol unit composed of a guard interval and a useful symbol interval. The system includes an analog-to-digital converter for converting an OFDM signal into digital complex samples, an FFT operation unit for performing FFT with respect to the useful symbol interval, a scattered pilot extractor for extracting scattered pilots from samples output from the FFT operating unit, a symbol timing offset estimator for estimating a symbol timing offset using scattered pilots extracted by the scattered pilot extractor, and an FFT window controller for setting a symbol timing synchronization point in a data transmission interval received from the analog-to-digital converter, adding samples in a predetermined interval extending from the symbol timing synchronization point toward the front of the data transmission interval to samples in an interval obtained by subtracting a predetermined length from a useful symbol interval starting from the symbol timing synchronization point, and inputting the result of addition to the FFT operation unit.

The above object and advantages of the present invention will become more apparent by describing in detail preferred embodiments thereof with reference to the attached drawings in which:
FIG. 1 is a conceptual diagram of symbol timing synchronization in a conventional orthogonal frequency division multiplex (OFDM) receiving system;
FIG. 2 is a block diagram of an entire OFDM receiving system performing symbol timing synchronization according to the present invention;
FIG. 3 is a conceptual diagram of a method of setting a fast Fourier transform (FFT) window period in an FFT window controller according to the present invention;
FIG. 4 is a conceptual diagram of a method of resetting an FFT window period in an FFT window controller and inputting reset information to an FFT operation unit;
FIG. 5 is a flowchart of a symbol timing synchronization method in an OFDM receiving system according to the present invention;
FIG. 6 is a graph of the performance of the present invention versus the performance of prior art in symbol timing synchronization; and
FIG. 7 is a graph of symbol error rates (SERs) exhibited after symbol timing synchronization and channel equalization according to the present invention and prior art.

Hereinafter, embodiments of the present invention will be described in detail with reference to the attached drawings.

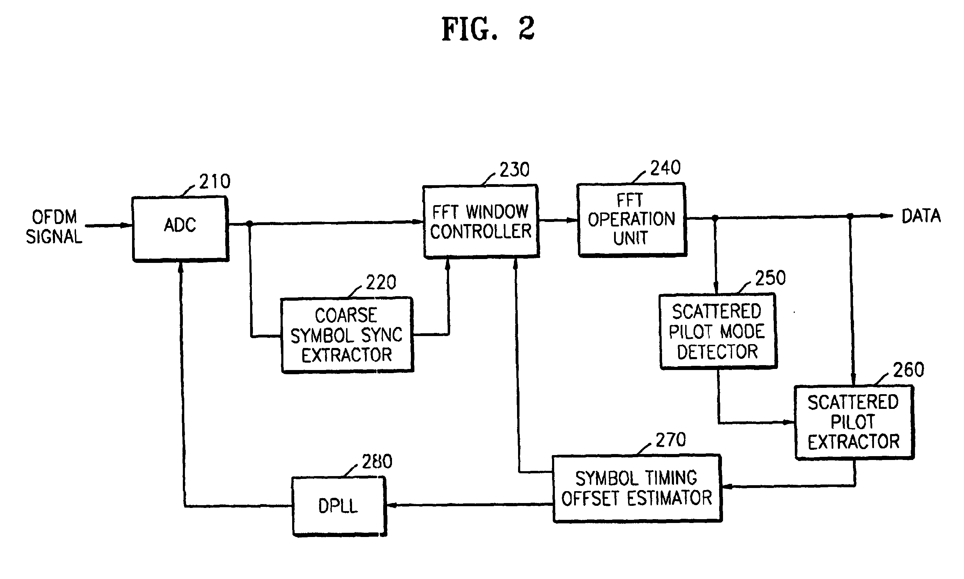

FIG. 2 is a block diagram of an entire orthogonal frequency division multiplex (OFDM) receiving system performing symbol timing synchronization according to the present invention. The OFDM receiving system of FIG. 2 includes an analog-to-digital converter (ADC) 210, a coarse symbol sync extractor 220, a fast Fourier transform (FFT) window controller 230, an FFT operation unit 240, a scattered pilot mode detector 250, a scattered pilot extractor 260, a symbol timing offset estimator 270, and a digital phase locked loop (DPLL) 280.

The ADC 210 converts an OFDM signal into digital complex samples having a sample rate of 9.14 MHz.

The coarse symbol sync extractor 220 extracts a coarse symbol start point from received digital complex samples.

The FFT window controller 230 detects a coarse symbol start point using a coarse symbol sync signal extracted by the coarse symbol sync extractor 220, sets a symbol timing synchronization point using an offset value estimated by a symbol timing offset estimator 270, adds samples in a predetermined interval extending from the symbol timing synchronization point toward the front of a data transmission interval to samples in an interval obtained by subtracting a predetermined length from a useful symbol interval starting from the symbol timing synchronization point, and inputs the result of addition to the FFT operation unit 240.

The FFT operation unit 230 performs FFT with respect to samples corresponding to the useful symbol interval output from the FFT window controller 120, and outputs a frequency domain signal. The frequency domain signal includes a scattered pilot signal containing information necessary for OFDM transmission in addition to general data. Scattered pilot signals which have been inserted into each symbol of the frequency domain signal at intervals of 12 samples are necessary for symbol timing synchronization.

The scattered pilot mode detector 250 decides the mode of a scattered pilot and compares the sums of powers of subcarriers corresponding to each scattered pilot mode with one another based on the feature that a pilot has greater power than usual data to detect a mode having greatest power among four modes.

The scattered pilot extractor 260 extracts scattered pilots which have been inserted into a symbol using a scattered pilot start mode detected by the scattered pilot mode detector 250.

The symbol timing offset estimator 270 estimates a symbol timing offset composed of an integer part and a fraction part using scattered pilots extracted by the scattered pilot extractor 260. The integer part is applied to the FFT window controller 230 to perform fine symbol timing synchronization, and the fraction part is applied to the ADC 210 through the DPLL 280 to control the sampling clock signal of the ADC 210.

The DPLL 280 changes the frequency and phase of a sampling clock signal of the ADC 210 using the fraction part of the a symbol timing offset output from the symbol timing offset estimator 260.

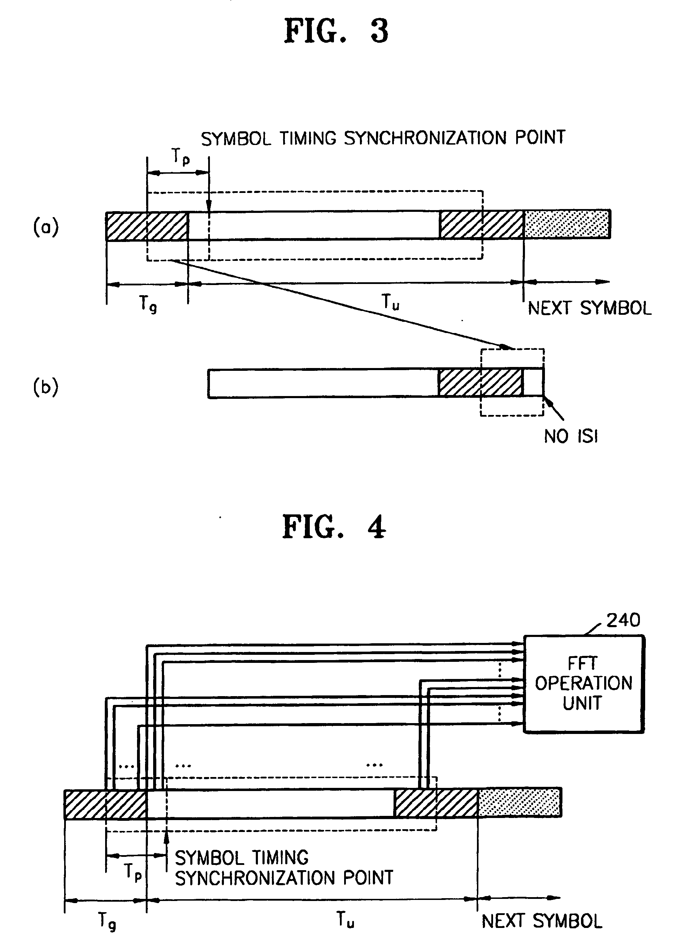

FIG. 3 is a conceptual diagram of a method of setting an FFT window period in an FFT window controller according to the present invention. Referring to (a) of FIG 3, the FFT window controller 230 sets a symbol timing synchronization point in a data transmission interval composed of a guard interval T_{g} and a useful symbol interval Tᵤ using a timing symbol offset estimated by the symbol timing offset estimator 270. Next, the FFT window controller 230 adds samples in a predetermined interval Tₚ extending from the symbol timing synchronization point toward the front of the data transmission interval to samples in an interval obtained by subtracting a predetermined length from the useful symbol interval Tᵤ starting from the symbol timing synchronization point. Here, the predetermined interval Tₚ is set to be shorter than the guard interval T_{g} according to a channel environment.

Referring to (b) of FIG. 3, the samples in the predetermined interval Tₚ correspond to a guard interval obtained by copying a portion of the useful symbol interval Tᵤ and thus are included in the symbol to be fast Fourier transformed. Accordingly, the single symbol is fast Fourier transformed, thereby preventing intersymbol interference (ISI) in the OFDM receiving system.

FIG. 4 is a conceptual diagram of a method of resetting an FFT window period in an FFT window controller and inputting reset information to an FFT operation unit. The FFT window controller 230 adds samples in a predetermined interval Tₚ extending from a symbol timing synchronization point set in a data transmission interval toward the front of the data transmission interval to samples in an interval obtained by subtracting a predetermined length from a useful symbol interval Tᵤ starting from the symbol timing synchronization point and inputs the result of addition to the FFT operation unit 240. For example, when a data transmission mode is 2 K, the FFT window controller 230 inputs 2048 samples to the FFT operation unit 240 in parallel.

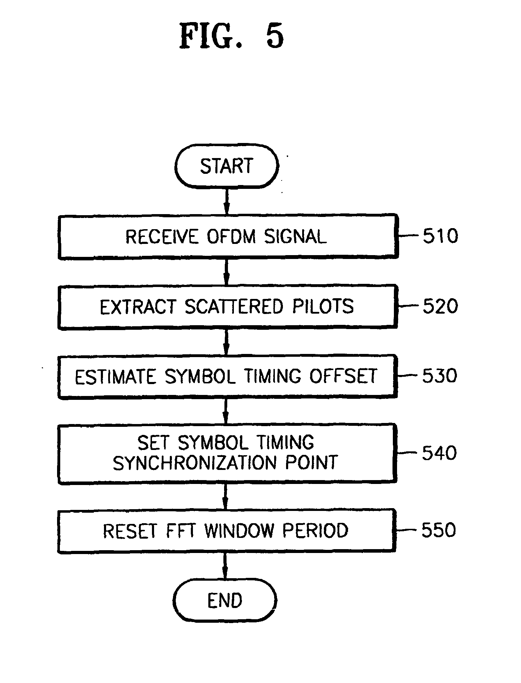

FIG. 5 is a flowchart of a symbol timing synchronization method in an OFDM receiving system according to the present invention. In step 510, an OFDM signal is received in units of symbols from an OFDM transmitting system.

Next, in step 520, scattered pilots which have been inserted into a symbol at intervals of predetermined samples are extracted from the received OFDM signal.

Next, a symbol timing offset is estimated using the extracted scattered pilots in step 530, and a symbol timing synchronization point is set in a data transmission interval composed of a guard interval and a useful symbol interval in step 540.

Next, in step 550, samples in a predetermined interval extending from the symbol timing synchronization point toward the front of the data transmission interval are added to samples in an interval obtained by subtracting a predetermined length from a useful symbol interval starting from the symbol timing synchronization point, thereby resetting an FFT window period.

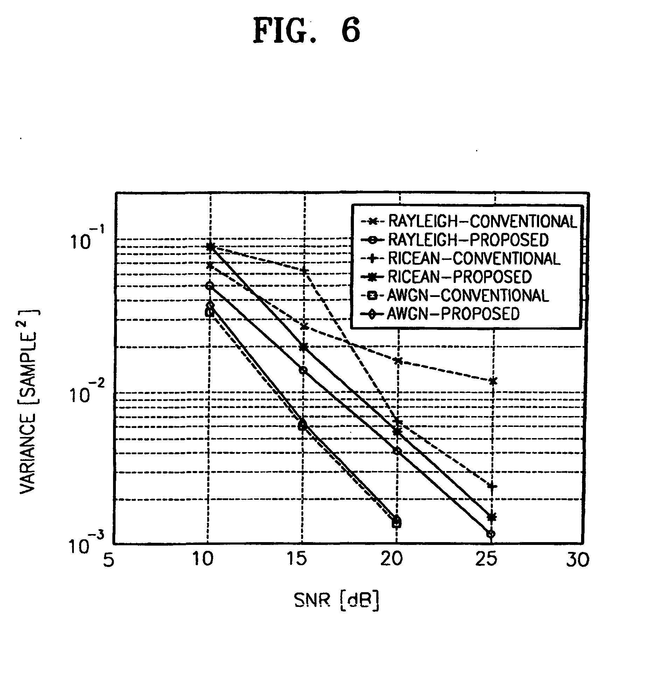

FIG. 6 is a graph of the performance of the present invention versus the performance of prior art in symbol timing synchronization. The graphs shows the square mean SAMPLE² of a symbol timing offset remaining after symbol timing synchronization in a digital video broadcasting-terrestrial (DVB-T) system. A test was performed in a data transmission mode of 2 K, in a guard interval length mode of 1/16, and with an initial sample offset of 1000 samples, a sampling clock frequency offset of 200 ppm, an initial sampling clock phase offset of 200 ppm, and a loop bandwidth of 500 ppm in a PLL block. 20 channels according to the DVB-T test specifications are used as a multi-path. The present invention has a lower square mean SAMPLE² of a remaining symbol timing offset than the prior art with respect to a Rayleigh channel and a Ricean channel.

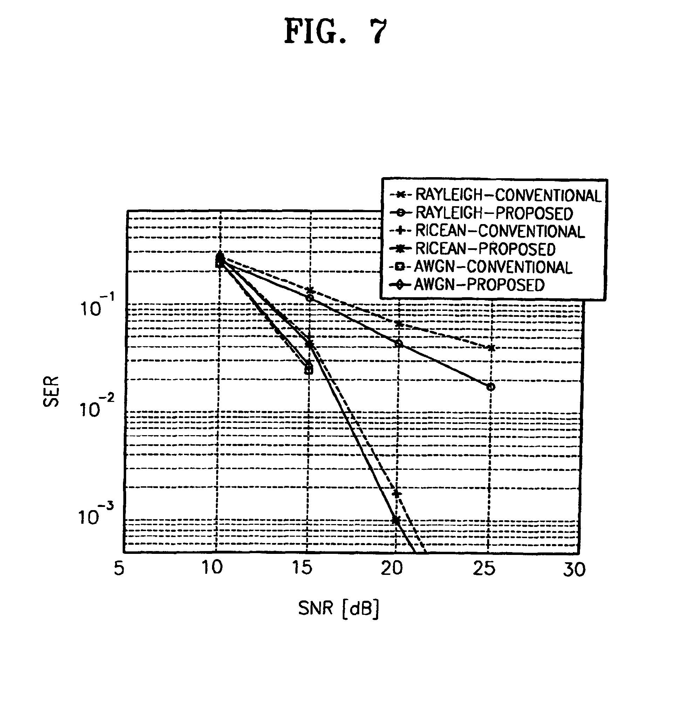

FIG. 7 is a graph of symbol error rates (SERs) exhibited after symbol timing synchronization and channel equalization according to the present invention and prior art. A test was performed under the same conditions as in FIG. 6. For a channel-equalization algorithm, channel estimation and equalization are performed by performing linear interpolation using scattered pilots during a 4-symbol period. Referring to FIG. 7, the present invention has a lower SER than the prior art with respect to a Rayleigh channel.

As described above, according to the present invention, symbol timing synchronization and channel equalization can be accurately performed without having ISI even when a symbol start point is not correctly decided under a multi-channel (or a Rayleigh channel) or a pre-ghost channel environment.

The present invention is not restricted to the embodiments described above, and it will be understood by those skilled in the art that various changes in form and details may be made therein. In other words, the present invention can be applied to European type digital TV, wireless LANs according to IEEE 802.11a and other systems using OFDM.

The present invention can be embodied as a program which can be executed in a computer. The program can be read from a medium used in a computer and executed by the computer. The medium may be a storage medium such as a magnetic storage medium (for example, a ROM, a floppy disc, or a hard disc), an optical readable medium (for example, a CD-ROM or a DVD), or a carrier wave (for example, transmission through Internet). In addition, the program can be distributively stored in computer readable recording media in computer systems connected through a network and can be executed.

## Claims

1. An OFDM receiving method of performing FFT with respect to a data transmission interval of a symbol unit composed of a guard interval (T_{g}) and a useful symbol interval (Tᵤ), the method comprising estimating a symbol timing and setting a symbol timing,
the method further comprises extracting (520) scattered pilots, which are inserted into a symbol at intervals of predetermined samples, from a received OFDM signal;
the step of estimating the symbol timing and setting the symbol timing comprises estimating (530) a symbol timing offset using the extracted scattered pilots and setting (540) a symbol timing synchronization point in the data transmission interval;
**characterized in that**
the method further comprises adding samples in a predetermined interval (Tₚ) in the data transmission interval to samples in an interval, wherein the interval is obtained by subtracting a predetermined length from the useful symbol interval starting from the symbol timing synchronization point and performing FFT with respect to the result of addition; and
the predetermined interval in the data transmission interval extends from the symbol timing synchronization point toward the front of the data transmission interval.

2. The method of claim 1, wherein the predetermined interval in the data transmission interval is shorter than the guard interval.

3. The method of claim 1 or 2, wherein the predetermined interval in the data transmission interval changes depending on a channel environment.

4. An OFDM receiving system for performing FFT with respect to a data transmission interval of a symbol unit composed of a guard interval (T_{g}) and a useful symbol interval (Tᵤ), the system comprising:
an analog-to-digital converter (210) for converting an OFDM signal into digital complex samples;
FFT operation means (240) for performing FFT with respect to the useful symbol interval;
means for estimating a symbol timing,
a scattered pilot extractor (260) for extracting (520) scattered pilots from samples output from the FFT operating means;
wherein
the means for estimating the symbol timing is a symbol timing offset estimator (270) for estimating (530) a symbol timing offset using scattered pilots extracted by the scattered pilot extractor;
**characterized in that**
the system further comprises an FFT window controller (230) for setting (540) a symbol timing synchronization point in the data transmission interval received from the analog-to-digital converter, adding samples in a predetermined interval (Tₚ) extending from the symbol timing synchronization point toward the front of the data transmission interval to samples in an interval, wherein the interval is obtained by subtracting a predetermined length from the useful symbol interval starting from the symbol timing synchronization point, and inputting (550) the result of addition to the FFT operation means.

## Patentansprüche

1. OFDM-Empfangsverfahren zum Durchführen von FFT bezüglich eines Datenübertragungsintervalls einer Symboleinheit, die zusammengesetzt ist aus einem Schutzintervall (guard interval) (T_{g}) und einem nutzbaren Symbolintervall (Tᵤ), wobei das Verfahren ein Abschätzen eines Symbol-Timings und ein Setzen eines Symbol-Timings umfasst,
wobei das Verfahren ferner ein Extrahieren (520) verstreuter Piloten (scattered pilots), welche in ein Symbol bei Intervallen vorbestimmter Abtastpunkte (samples) eingefügt sind, aus einem empfangenen OFDM-Signal umfasst;
wobei der Schritt des Abschätzens des Symbol-Timings und des Setzens des Symbol-Timings ein Abschätzen (530) eines Symbol-Timing-Offsets unter Benutzung der extrahierten verstreuten Piloten und ein Setzen (540) eines Symbol-Timing-Synchronisationspunkts in dem Daten-Transmissions-Intervall umfasst;
**dadurch gekennzeichnet, dass**
das Verfahren ferner ein Addieren von Abtastpunkten in einem vorbestimmten Intervall (Tₚ) in dem Daten-Transmissions-Intervall zu Abtastpunkten in einem Intervall, wobei das Intervall durch Subtraktion einer vorbestimmten Länge von dem nutzbaren Symbolintervall erhalten wird, wobei bei dem Symbol-Timing-Synchronisationspunkt begonnen wird, und ein Durchführen von FFT bezüglich des Additionsergebnisses umfasst; und
sich das vorbestimmte Intervall in dem Daten-Transmissions-Intervall von dem Symbol-Timing-Synchronisationspunkt auf den Beginn des Daten-Transmissions-Intervalls hin erstreckt.

2. Verfahren nach Anspruch 1, wobei das vorbestimmte Intervall in dem Daten-Transmissions-Intervall kürzer als das Schutzintervall ist.

3. Verfahren nach Anspruch 1 oder 2, wobei das vorbestimmte Intervall in dem Daten-Transmissions-Intervall sich abhängig von einer Kanalumgebung ändert.

4. OFDM-Empfangssystem zum Durchführen von FFT bezüglich eines Daten-Transmissions-Intervalls einer Symboleinheit, die zusammengesetzt ist aus einem Schutzintervall (guard interval) (T_{g}) und einem nutzbaren Symbolintervall (Tᵤ), wobei das System umfasst:
einen Analog-Digital-Wandler (210) zum Umwandeln eines OFDM-Signals in digitale komplexe Abtastpunkte (samples);
eine FFT-Betriebseinrichtung (FFT operation means) (240) zum Durchführen von FFT bezüglich des nutzbaren Symbolintervalls;
eine Einrichtung zum Abschätzen eines Symbol-Timings,
eine Verstreute-Piloten-Extraktionseinrichtung (260) zum Extrahieren (520) verstreuter Piloten (scattered pilots) aus von der FFT-Betriebseinrichtung ausgegebenen Abtastpunkten (samples);
wobei die Einrichtung zum Abschätzen des Symbol-Timings eine Symbol-Timing-Offset-Abschätzeinrichtung (270) zum Abschätzen (530) eines Symbol-Timing-Offsets unter Benutzung der durch die Verstreute-Piloten-Extraktionseinrichtung extrahierten verstreuten Piloten ist;
**dadurch gekennzeichnet, dass**
das System ferner einen FFT-Fenster-Controller (230) zum Setzen (540) eines Symbol-Timing-Synchronisationspunkts in dem Daten-Transmissions-Intervall, das von dem Analog-Digital-Wandler empfangen wird, zum Addieren von Abtastpunkten in einem vorbestimmten Intervall (Tₚ), das sich von dem Symbol-Timing-Synchronisationspunkt auf den Anfang des Daten-Transmissions-Intervalls hin erstreckt, zu Abtastpunkten in einem Intervall, wobei das Intervall durch Subtrahieren einer vorbestimmten Länge von dem nutzbaren Symbolintervall erhalten wird, wobei bei dem Symbol-Timing-Synchronisationspunkt begonnen wird, und zum Eingeben (550) des Additionsergebnisses in die FFT-Betriebseinrichtung umfasst.

## Revendications

1. Procédé de réception MDFO d' exécution d' une transformation accélérée de Fourier (FFT) par rapport à un intervalle de transmission de données d'une unité de symbole constituée d'un intervalle de garde (T_{g}) et d'un intervalle de symbole utile (Tᵤ), le procédé comportant l'étape consistant à estimer un timing de symbole et à établir un timing de symbole,
le procédé comporte en outre l'étape consistant à extraire (520) des pilotes dispersés, lesquels sont insérés dans un symbole selon des intervalles d'échantillons (samples) prédéterminés, à partir d'un signal MDFO reçu,
l'étape consistant à estimer le timing de symbole et à établir le timing de symbole comporte l'estimation (530) d'un décalage de timing de symbole en utilisant les pilotes dispersés extraits et l'établissement (540) d'un point de synchronisation de timing de symbole dans l'intervalle de transmission de données,
**caractérisé en ce que**
le procédé comporte en outre l'ajout d'échantillons dans un intervalle prédéterminé (Tₚ) de l'intervalle de transmission de données à des échantillons dans un intervalle, l'intervalle étant obtenu en soustrayant une longueur prédéterminée de l'intervalle de symboles utile en commençant à partir du point de synchronisation de timing de symbole et l' exécution une transformation FFT par rapport au résultat de l'addition, et
l'intervalle prédéterminé dans l'intervalle de transmission de données s'étend depuis le point de synchronisation de timing de symbole vers l'avant de l'intervalle de transmission de données.

2. Procédé selon la revendication 1, dans lequel l'intervalle prédéterminé dans l'intervalle de transmission de données est plus court que l'intervalle de garde.

3. Procédé selon la revendication 1 ou 2, dans lequel l'intervalle prédéterminé dans l'intervalle de transmission de données change en fonction d'un environnement de canal.

4. Système de réception MDFO pour exécuter une transformation FFT par rapport à un intervalle de transmission de données d'une unité de symbole constituée d'un intervalle de garde (T_{g}) et d'un intervalle de symbole utile (Tᵤ), le système comportant :
un convertisseur analogique-numérique (210) pour convertir un signal MDFO en échantillons (samples) complexes numériques,
des moyens d'exécution FFT (240) pour exécuter une transformation FFT par rapport à l'intervalle de symbole utile,
des moyens pour estimer un timing de symbole,
un extracteur de pilotes dispersés (260) pour extraire (520) des pilotes dispersés à partir d'échantillons délivrés en sortie par les moyens d'exécution FFT,
dans lequel les moyens pour estimer le timing de symbole sont un estimateur de décalage de timing de symbole (270) pour estimer (530) un décalage de timing de symbole en utilisant des pilotes dispersés extraits par l'extracteur de pilotes dispersés,
**caractérisé en ce que**
le système comporte en outre un contrôleur de fenêtre FFT (230) pour établir (540) un point de synchronisation de timing de symbole dans l'intervalle de transmission de données reçu depuis le convertisseur analogique-numérique, ajouter des échantillons dans un intervalle prédéterminé (Tₚ) s'étendant depuis le point de synchronisation de timing de symbole vers l'avant de l'intervalle de transmission de données à des échantillons dans un intervalle, l'intervalle étant obtenu en soustrayant une longueur prédéterminée de l'intervalle de symbole utile en commençant à partir du point de synchronisation de timing de symbole, et entrer (550) le résultat d'addition dans les moyens d'exécution FFT.
